# FASCICULE DE BREVET EUROPEEN

(11) **EP 4 483 043 B1**
(45) Date de publication et mention de la délivrance du brevet: **29.10.2025**
(21) Numéro de dépôt: 23707784.7
(22) Date de dépôt: 21.02.2023
(51) Int. Cl.: F01D 11/00, F16J 15/00, F01D 9/06, F01D 25/16, F01D 25/18, F02C 7/06, F16C 33/66, F16J 15/16, F16J 15/447, F16J 15/54, F16N 31/00, F16J 15/18, F01D 11/12, F01D 11/02

(54) **SYSTEME D'ETANCHEITE ET DE DRAINAGE DE FUITES D'HUILE POUR ENCEINTE DE PALIER DE TURBOMACHINE**
SYSTEM ZUM ABDICHTEN UND ENTLEEREN VON ÖLLECKS FÜR EIN TURBOMASCHINENLAGERGEHÄUSE
SYSTEM FOR SEALING AND DRAINING OIL LEAKS FOR A TURBOMACHINE BEARING ENCLOSURE

(30) Priorité: 21.02.2022 FR 2201525
(43) Date de publication de la demande: 01.01.2025
(73) Titulaire: SAFRAN AIRCRAFT ENGINES, 75015 Paris (FR)
(72) Inventeur: STOLIAROFF-PEPIN, Nicolas, 77550 Moissy-Cramayel (FR); FONTANEL, Eddy Stéphane Joël, 77550 Moissy-Cramayel (FR); GAMEIRO, Sébastien, 77550 Moissy-Cramayel (FR); MAURER, Paco, 77550 Moissy-Cramayel (FR)
(74) Mandataire: Brevalex
(86) Numéro de dépôt international: PCT/FR2023/050244
(87) Numéro de publication internationale: WO 2023/156752

(56) Documents cités:
- DE-A1- 10 322 027
- FR-A1- 3 056 656

## Description

### DOMAINE TECHNIQUE

L'invention concerne une cavité de drainage dédiée à la collecte d'huile susceptible de fuir à travers un joint que cette cavité jouxte, dans un système d'étanchéité intégrant ce joint et cette cavité.

### ÉTAT DE LA TECHNIQUE ANTÉRIEURE

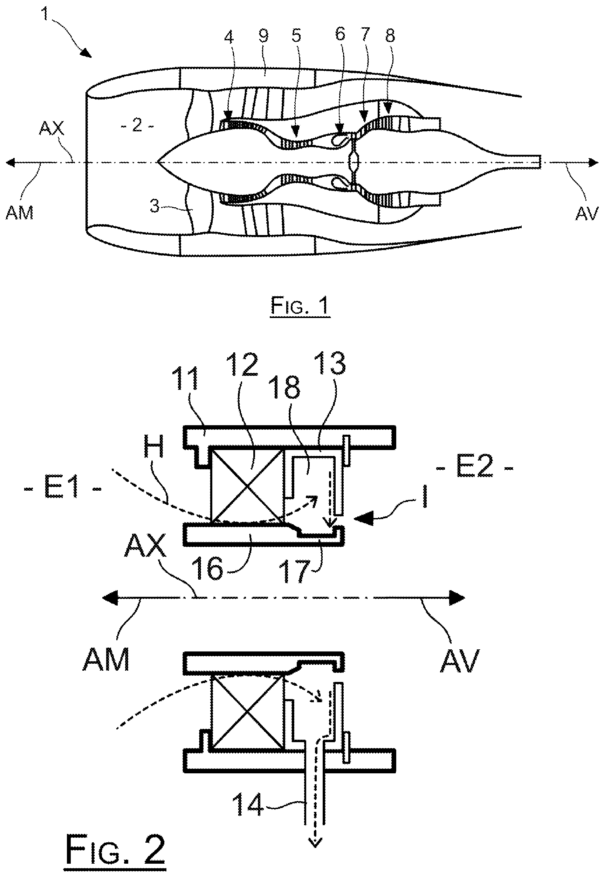

Sur la figure 1, un turboréacteur 1 à double flux comporte à son amont AM une manche d'entrée 2 dans laquelle l'air extérieur est admis avant de traverser une soufflante 3 comportant une série de pales rotatives, pour être ensuite scindé en un flux primaire central et un flux secondaire entourant le flux primaire.

Le flux primaire traverse un compresseur basse pression 4 puis un compresseur haute pression 5 avant d'arriver dans une chambre de combustion 6, après quoi il se détend à travers une turbine haute pression 7 puis une turbine basse pression 8 avant d'être évacué vers l'aval AV. Le flux secondaire est quant à lui propulsé directement vers l'aval par la soufflante 3 dans une veine délimitée par le carter 9 pour générer une poussée. Un tel moteur comporte un rotor tournant autour de son axe longitudinal AX, et incluant plusieurs disques portant chacun à sa périphérie une série d'aubes ou de pales, ces disques correspondant à la soufflante, aux compresseurs et aux turbines.

Dans le cas d'un turboréacteur double corps, le compresseur haute pression et la turbine haute pression font partie d'un corps haute pression qui entoure un arbre basse pression et qui tourne à une vitesse différente de celui-ci, cet arbre basse pression portant le compresseur basse pression et la turbine basse pression. L'arbre et le corps haute pression sont portés par des paliers logés dans des enceintes de lubrification qui les isolent du reste du moteur.

Une telle enceinte est délimitée par des parois tournant l'une par rapport à l'autre avec un joint entre ces parois, qui limite la section de fuite d'huile. Complémentairement, une telle enceinte est dite pressurisée, ce qui en pratique signifie que l'intérieur de l'enceinte est à une pression inférieure à celle de son environnement. Ainsi, l'huile est éloignée du joint au moyen d'un filet d'air entrant en permanence à travers ce joint, depuis l'extérieur vers l'intérieur de l'enceinte.

Sur la figure 2, un stator 11 porte à sa face interne un joint circonférentiel 12 et une gorge circonférentielle interne 13 tournée vers l'axe de rotation AX du moteur et accolée à la face aval de ce joint 12. Cette gorge 13 est raccordée à un drain 14 porté par le stator et situé en partie basse de celui-ci par rapport à la direction verticale. Un rotor 16 est engagé dans ce stator 11 en ayant sa face externe glissant contre le joint 12, ce rotor 16 comportant une gorge circonférentielle externe 17 située radialement en vis-à-vis de la gorge 13.

Les gorges 13 et 17 délimitent une cavité de drainage 18 reliée au drain 14 pour former avec le joint 12 un système d'étanchéité d'une enceinte E1 située à l'amont de ce système. Cette cavité de drainage 18 jouxte le joint 12 pour collecter de l'huile susceptible de fuir à travers ce joint 12 en circulant de l'amont AM vers l'aval AV depuis l'enceinte E1, pour éviter qu'elle n'atteigne un espace E2 extérieur à l'enceinte E1. Lorsque le moteur est horizontal, comme dans la figure 2, l'huile H traversant le joint 12 vers l'aval en longeant le rotor 16 est centrifugée par ce rotor dans la gorge 13, pour être ensuite collectée en partie basse du stator par le drain 14. Comme visible sur la figure 2, l'huile centrifugée dans la gorge 13 en partie haute du moteur peut ruisseler verticalement le long de la face aval de la gorge 13 pour être collectée par la gorge 17 et être à nouveau centrifugée, de sorte qu'elle finit par atteindre la partie basse de la gorge 13 pour être collectée par le drain 14.

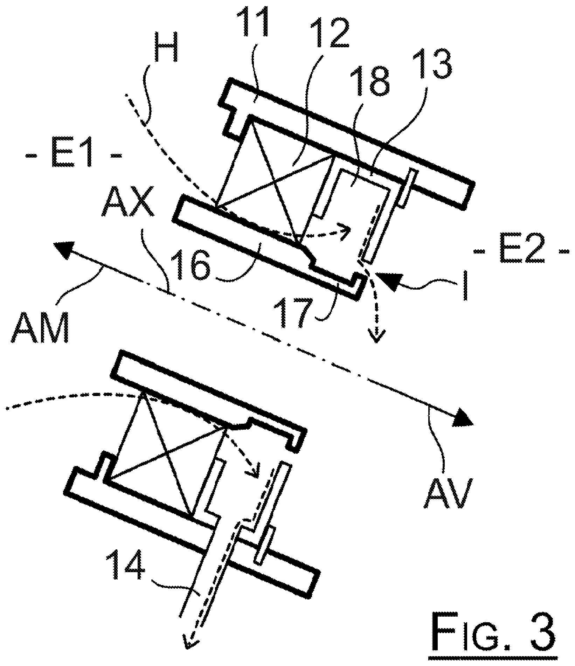

En cas d'inclinaison du moteur comme dans la figure 3, par exemple au décollage de l'aéronef, l'huile centrifugée dans la partie haute de la gorge 13 qui ruisselle le long de la face aval de cette gorge 13 est susceptible de sortir de cette gorge 13 par l'interstice I séparant radialement cette gorge 13 statorique de la gorge 17 rotative.

Comme visible sur la figure 3, cette sortie d'huile est due à la gravité, qui tend à la faire descendre verticalement alors que la face aval de la gorge 13 a une orientation oblique du fait de l'inclinaison du moteur. Autrement dit, c'est du fait de l'inclinaison du moteur par rapport à la verticale que l'huile est conduite à traverser l'interstice I pour fuir hors de la cavité 18, et le fait qu'il s'agisse d'une enceinte pressurisée ne suffit pas à contrer ce type de fuite.

Des fuites peuvent aussi intervenir dans des situations où l'enceinte n'est pas suffisamment pressurisée, durant une phase transitoire de fonctionnement, par exemple lorsque le moteur est au ralenti ou à l'arrêt, ou encore en cas de défaillance du joint.

Le but de l'invention est d'apporter une solution de système d'étanchéité permettant de réduire voire annuler les fuites vers l'espace extérieur de l'huile collectée dans la cavité de drainage.

Un joint d'étanchéité similaire est connu de DE 103 22 027 A1, selon le préambule de la revendication 1.

### EXPOSÉ DE L'INVENTION

A cet effet, l'invention a pour objet un système d'étanchéité et de drainage de fuites d'huile pour enceinte de palier de turbomachine, ce palier comprenant un stator portant un rotor tournant autour d'un axe de rotation, ce système comprenant un joint porté par le stator et entourant le rotor, une gorge circonférentielle externe portée par le stator en étant contiguë au joint pour collecter de l'huile fuyarde cheminant le long du rotor à travers le joint et qui est centrifugée par le rotor vers cette gorge circonférentielle, un drain situé en partie basse de la turbomachine pour collecter l'huile récupérée par la gorge circonférentielle, cette gorge circonférentielle étant ouverte vers l'axe de rotation en étant délimitée par un fond prolongé par deux parois latérales, la paroi latérale opposée au joint étant terminée par une rigole s'ouvrant vers le fond.

Grâce à la rigole portée par la paroi latérale opposée au joint, l'huile centrifugée vers le fond de la gorge externe est nécessairement collectée par cette rigole au lieu de retomber sur le rotor pour risquer de continuer sa progression au-delà du système d'étanchéité.

L'invention permet ainsi de mieux guider les fuites d'huile vers le drain afin que celles-ci ne viennent pas polluer le reste du moteur et cela en adaptant une pièce déjà existante. L'invention concerne également un système d'étanchéité ainsi défini, dans lequel la rigole est absente en partie basse de la gorge circonférentielle.

L'invention concerne également un système d'étanchéité ainsi défini, dans lequel le fond est formé par une paroi tronconique dont le diamètre interne diminue en s'éloignant du joint.

L'invention concerne également un système d'étanchéité ainsi défini, comprenant une gorge circonférentielle interne formée dans le rotor en vis-à-vis de la gorge circonférentielle externe, cette gorge circonférentielle interne ayant une longueur le long de l'axe de rotation qui est inférieure à la longueur de la gorge circonférentielle externe le long de l'axe de rotation.

L'invention concerne également un système d'étanchéité ainsi défini, dans lequel la gorge circonférentielle interne présente un fond de forme tronconique dont le diamètre interne diminue en s'éloignant du joint.

L'invention concerne également un système d'étanchéité ainsi défini, dans lequel le rotor comporte une nervure circonférentielle terminant la gorge circonférentielle interne. L'invention concerne également un système d'étanchéité ainsi défini, comportant des léchettes solidaires du rotor glissant le long d'une face radialement interne de la rigole qui est pourvue d'éléments abradables, pour constituer un joint labyrinthe.

L'invention concerne également une turbomachine comprenant une enceinte de palier qui est équipée d'un système d'étanchéité ainsi défini.

L'invention concerne également un turboréacteur comprenant une enceinte de palier qui est équipée d'un système d'étanchéité ainsi défini.

### BRÈVE DESCRIPTION DES DESSINS

La [Fig. 1] est une vue en coupe longitudinale d'un moteur de type turboréacteur ;
La [Fig. 2] est une vue en coupe longitudinale d'un système d'étanchéité connu lorsque le moteur qu'elle équipe est horizontal ;
La [Fig. 3] est une vue en coupe longitudinale d'un système d'étanchéité connu lorsque le moteur qu'il équipe est incliné ;
La [Fig. 4] est une vue en coupe longitudinale d'un système d'étanchéité selon l'invention lorsque le moteur qu'il équipe est horizontal ;
La [Fig. 5] est une vue schématique montrant trois exemples de profils possibles pour la rigole de la gorge externe ;
La [Fig. 6] est une vue en coupe transversale du moteur au niveau de la gorge externe ;
La [Fig. 7] est une vue en coupe longitudinale d'un système d'étanchéité selon l'invention lorsque le moteur qu'il équipe est incliné.

### EXPOSÉ DÉTAILLÉ DE MODES DE RÉALISATION PARTICULIERS

L'idée à la base de l'invention est d'améliorer la gorge externe pour qu'elle capte mieux l'huile fuyant à travers le joint.

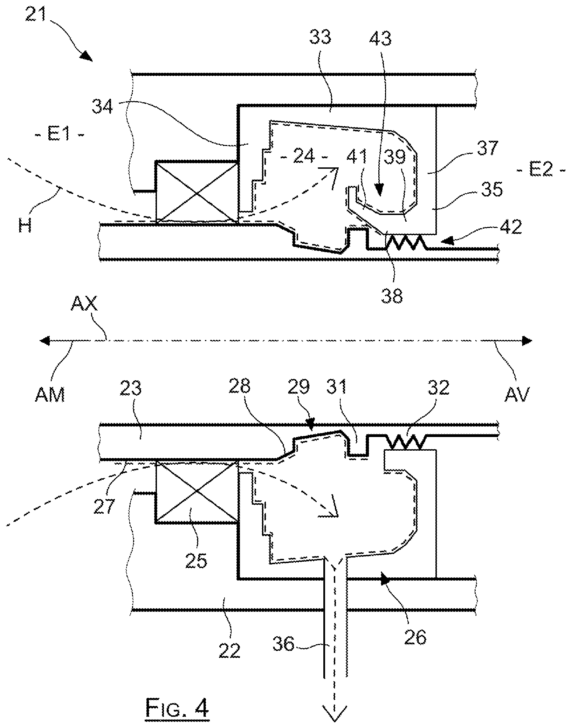

Sur la figure 4, un système d'étanchéité 21 assure une étanchéité entre un stator 22 entourant un rotor 23 d'un turboréacteur d'axe de rotation AX. Ce système s'oppose au passage d'huile depuis une enceinte de palier E1 située à l'amont AM de ce système d'étanchéité 21, à travers une cavité de drainage 24 qu'il comporte, vers un espace E2 du turboréacteur situé hors de l'enceinte E1 et qui est situé à l'aval AV de ce système 21 dans l'exemple des figures.

Ce système 21 qui constitue une barrière d'étanchéité comporte un joint 25 porté par le stator 22 et entourant le rotor 23, qui est ici un joint radial segmenté, et une gorge externe 26 portée par le stator 22 en étant située immédiatement à l'aval du joint 25, cette gorge externe 26 étant ouverte vers l'axe AX.

Le rotor 23 présente une forme de révolution incluant une portion cylindrique 27 au niveau du joint 25 qui est prolongée vers l'aval AV par une portion conique ou épaulement 28 délimitant une réduction de diamètre, à l'aval duquel s'étend une gorge interne 29 située radialement en vis-à-vis de la gorge externe 26 du stator. En aval de la gorge 29, le rotor 23 comporte une nervure circonférentielle 31 suivie avantageusement par une portion d'étanchéité pourvue de trois léchettes 32.

La gorge externe 26 comporte un fond 33 prolongé par une paroi latérale amont 34 longeant le joint 25 et une paroi latérale aval 35 opposée au joint 25, le fond et les parois latérales délimitant conjointement une forme correspondant se rapprochant de celle de la lettre U qui est ouverte en direction de l'axe AX.

Complémentairement, un drain 36 situé au point le plus bas du fond 33 débouche dans ce fond, de manière à collecter l'huile pouvant s'accumuler en partie inférieure de la gorge 26, de manière à la renvoyer par exemple vers une boîte de récupération dédiée.

La paroi latérale aval 35 comporte un corps 37 ayant une forme de couronne d'orientation normale à l'axe AX, et dont le bord radialement interne est prolongé par une jupe interne 38 s'étendant en direction du fond 33. Cette jupe interne 38 comporte dans l'exemple des figures une portion cylindrique 39 longeant les léchettes 32, et qui est terminée par une portion conique 41 la rapprochant radialement du fond 33, de sorte qu'elle a une forme générale annulaire qui est évasée en direction de l'enceinte E1.

La face interne de la portion cylindrique 39 comporte des éléments abradables de façon à constituer avec les léchettes 32 un joint labyrinthe 42 s'opposant au passage d'huile vers l'espace E2. D'autres formes de la portion d'étanchéité qui comprend les léchettes 32 sont envisageables. Il est également possible de se passer d'une telle portion d'étanchéité, voire de se passer du joint labyrinthe 42 dans son ensemble, si le passage d'huile vers l'espace E2 reste minime et tolérable.

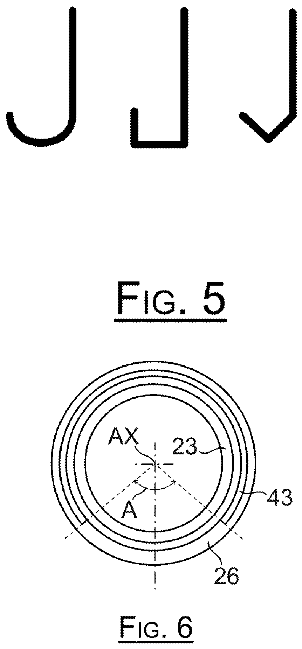

La jupe interne 38 délimite avec la paroi latérale aval 35 une rigole 43 s'étendant dans la gorge 26. Dans l'exemple de la figure 4 cette rigole 43 a une section trapézoïdale, mais d'autres formes sont possibles comme illustré sur la figure 5, comme par exemple une forme arrondie, rectangulaire, triangulaire ou autre.

En cas de panne, ou de fonctionnement avec une pression dans l'espace E2 insuffisante pour empêcher une fuite d'huile hors de l'enceinte, l'huile H qui traverse le joint 25 en longeant la face externe de la portion cylindrique 27 du rotor chemine vers l'aval AV, c'est-à-dire vers la gorge 29, en direction de la cavité de drainage 24 jouxtant ce joint. Lors de son cheminement vers ou dans la gorge 29, cette huile H est centrifugée par la rotation du rotor 23, de sorte qu'elle est collectée par la gorge 26, au niveau de son fond 33 et/ou de ses parois latérales 34, 35.

Comme visible sur la figure 4, le fond 33 a une forme de tronc de cône dont le diamètre interne diminue vers l'aval AV, de sorte qu'en partie supérieure du moteur, la gravité agit sur l'huile collectée sur ce fond 33 pour qu'elle progresse spontanément vers l'aval AV.

En partie supérieure du moteur, l'huile collectée par le fond conique 33 est ainsi conduite par effet de la gravité vers l'aval AV en direction de la paroi latérale 35. Après avoir rejoint la paroi latérale 35, cette huile descend dans la rigole 43 par effet de gravité, puis elle ruisselle circonférentiellement dans cette rigole 43 vers le bas. Une fois qu'elle a atteint la partie inférieure du moteur, cette huile quitte la rigole 43 pour tomber sur le fond 33 et être récupérée dans le drain 36 qui est situé au point le plus bas de la gorge 26.

En partie inférieure du moteur, l'huile collectée par le fond 33 ruisselle le long de ce fond 33, jusqu'à atteindre le drain 36 par lequel elle est évacuée.

Sur la figure 4, la rigole 43 est absente dans la partie la plus basse du moteur, du fait qu'elle est avantageusement retirée sur une étendue angulaire A, de part et d'autre du point le plus bas du moteur autour de l'axe AX. Cette étendue angulaire A, qui apparaît sur la figure 6, peut être comprise entre 5° et 60° et vaut avantageusement 40° environ. Cette étendue angulaire dépourvue de rigole assure que l'huile pouvant s'être accumulée sur la nervure 31 du rotor puisse ruisseler par gravité directement vers le fond 33 lorsque le moteur est incliné. Cela évite que cette huile soit collectée par la face amont de la portion conique 41 qui pourrait alors la conduire vers l'aval en direction du joint labyrinthe 42.

Comme illustré sur les figures, la gorge 26 peut être prévue sous forme d'un profilé circulaire qui est rapporté à la face interne du stator 22, ce profilé comportant une portion dépourvue de rigole 43. Avantageusement ce profilé est muni d'une indexation angulaire de façon à permettre son positionnement angulaire adéquat pour assurer que la portion dépourvue de rigole 43 est située en partie basse du moteur.

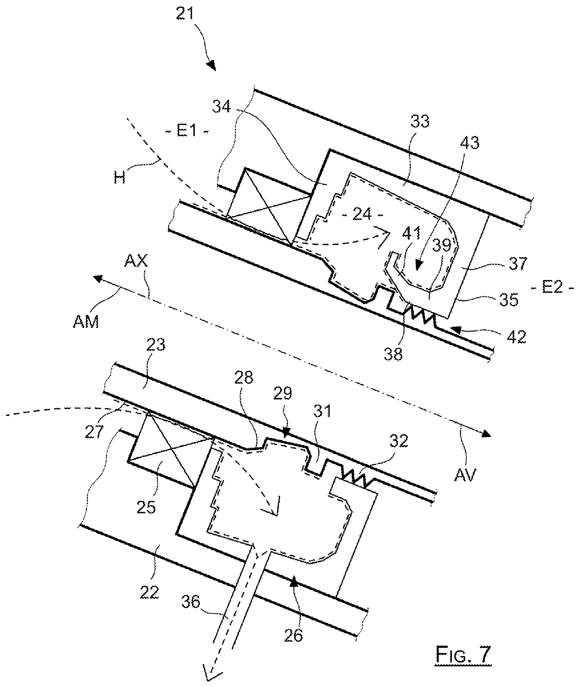

L'invention permet de limiter les pertes d'huile également lorsque le moteur est incliné, par exemple durant une phase de décollage, comme illustré sur la figure 7. Dans ce cas, l'huile fuyarde ayant traversé le joint 25 qui est projetée dans la gorge 26 en partie supérieure du moteur est d'abord captée par le fond 33 et par la paroi latérale 35. Elle progresse ensuite par gravité dans la rigole 43, pour ensuite descendre dans cette rigole 43 jusqu'à atteindre une partie inférieure de la gorge 26 afin d'y être collectée par le fond 33 pour être ensuite évacuée par le drain 36. Cette huile de la partie supérieure ne peut ainsi pas être dirigée vers le joint labyrinthe 42, et n'est donc pas susceptible de sortir.

L'huile qui traverse le joint 25 en partie basse du moteur est quant à elle collectée à peu près directement par le fond 33 et par la paroi latérale aval 35 pour être récupérée dans le drain 36.

Comme visible dans la partie inférieure de la figure 7, l'huile pouvant être présente sur la nervure 31 dans la partie basse du moteur peut goutter verticalement sous l'effet de la gravité dans le fond de la gorge 33 sans être interceptée par la rigole 43 qui est absente dans cette région du moteur, de sorte qu'elle ne risque pas non plus de traverser le joint labyrinthe 42 pour rejoindre l'espace extérieur E2.

Complémentairement, afin de limiter la quantité d'huile présente sur le rotor 23, le fond de la gorge interne 29 a une forme conique dont le diamètre diminue vers l'aval, de sorte que l'huile susceptible d'être présente dans cette gorge est dirigée vers l'amont par effet centrifuge. Dans ces conditions, cette huile est naturellement dirigée vers la face amont de la gorge 29 qui est normale à l'axe AX, de sorte qu'elle est spontanément centrifugée pour être collectée par le fond 33 de la gorge externe 26. La gorge interne 29 constitue ainsi un décroche gouttes au niveau de sa face amont.

D'une manière plus générale, la gorge interne 29 présente le long de l'axe AX une longueur inférieure à celle de la gorge externe 26 tout en étant située en vis-à-vis de cette gorge externe, pour assurer que l'huile captée dans cette gorge interne soit centrifugée dans la gorge externe plus large. Cette centrifugation intervient soit au niveau de la face amont de la gorge interne soit au niveau de la nervure 31 délimitant la face aval de cette gorge interne.

## Revendications

1. Système (21) d'étanchéité et de drainage de fuites d'huile pour enceinte (E1) de palier de turbomachine, ce palier comprenant un stator (22) portant un rotor (23) tournant autour d'un axe de rotation (AX), ce système (21) comprenant un joint (25) porté par le stator (22) et entourant le rotor (23), une gorge circonférentielle externe (26) portée par le stator (22) en étant contiguë au joint (25) pour collecter de l'huile fuyarde (H) cheminant le long du rotor (23) à travers le joint (25) et qui est centrifugée par le rotor (23) vers cette gorge circonférentielle (26), un drain (36) situé en partie basse de la turbomachine pour collecter l'huile (H) récupérée par la gorge circonférentielle (26), cette gorge circonférentielle (26) étant ouverte vers l'axe de rotation (AX) en étant délimitée par un fond (33) prolongé par deux parois latérales (34, 35), la paroi latérale (35) opposée au joint (25) étant terminée par une rigole (43) s'ouvrant vers le fond (33), **caractérisé en ce que** la rigole (43) est absente en partie basse de la gorge circonférentielle (26).

2. Système selon la revendication 1, dans lequel le fond (33) est formé par une paroi tronconique dont le diamètre interne diminue en s'éloignant du joint (25).

3. Système selon la revendication 1, comprenant une gorge circonférentielle interne (29) formée dans le rotor (23) en vis-à-vis de la gorge circonférentielle externe (26), cette gorge circonférentielle interne (29) ayant une longueur le long de l'axe de rotation (AX) qui est inférieure à la longueur de la gorge circonférentielle externe (26) le long de l'axe de rotation (AX).

4. Système selon la revendication 3, dans lequel la gorge circonférentielle interne (29) présente un fond de forme tronconique dont le diamètre diminue en s'éloignant du joint (25).

5. Système selon la revendication 3, dans lequel le rotor comporte une nervure circonférentielle (31) terminant la gorge circonférentielle interne (29).

6. Système selon la revendication 1, comportant des léchettes (32) solidaires du rotor (23) et glissant le long d'une face radialement interne de la rigole (43) qui est pourvue d'éléments abradables, pour constituer un joint labyrinthe (42).

7. Turbomachine comprenant une enceinte (E1) de palier qui est équipée d'un système d'étanchéité selon la revendication 1.

8. Turboréacteur comprenant une enceinte (E1) de palier qui est équipée d'un système d'étanchéité selon la revendication 1.

## Patentansprüche

1. System (21) zur Abdichtung und Ableitung von Ölleckagen für ein Lagergehäuse (E1) einer Turbomaschine, wobei dieses Lager einen Stator (22) umfasst, der einen Rotor (23) trägt, der sich um eine Drehachse (AX) dreht, wobei dieses System (21) eine Dichtung (25), die vom Stator (22) getragen wird und den Rotor (23) umgibt, eine äußere Umfangsnut (26), die vom Stator (22) getragen wird und an die Dichtung (25) angrenzt, um Lecköl (H) aufzufangen, das entlang des Rotors (23) durch die Dichtung (25) fließt und vom Rotor (23) zu dieser Umfangsnut (26) zentrifugiert wird, und einen Abfluss (36) umfasst, der sich im unteren Teil der Turbomaschine befindet, um das von der Umfangsnut (26) aufgenommene Öl (H) aufzufangen, wobei diese Umfangsnut (26) zur Drehachse (AX) hin geöffnet ist und durch einen Boden (33) begrenzt ist, der durch zwei Seitenwände (34, 35) verlängert wird, wobei die der Dichtung (25) gegenüberliegende Seitenwand (35) mit einer Rinne (43) endet, die sich zum Boden (33) hin öffnet, **dadurch gekennzeichnet, dass** die Rinne (43) im unteren Teil der Umfangsnut (26) fehlt.

2. System nach Anspruch 1, wobei der Boden (33) durch eine konische Wand gebildet ist, deren Innendurchmesser sich mit zunehmender Entfernung von der Dichtung (25) verringert.

3. System nach Anspruch 1, umfassend eine innere Umfangsnut (29), die im Rotor (23) gegenüber der äußeren Umfangsnut (26) ausgebildet ist, wobei diese innere Umfangsnut (29) eine Länge entlang der Drehachse (AX) aufweist, die kürzer ist als die Länge der äußeren Umfangsnut (26) entlang der Drehachse (AX).

4. System nach Anspruch 3, wobei die innere Umfangsnut (29) einen kegelförmigen Boden aufweist, dessen Durchmesser mit zunehmender Entfernung von der Dichtung (25) abnimmt.

5. System nach Anspruch 3, wobei der Rotor eine Umfangsrippe (31) aufweist, die die innere Umfangsnut (29) beendet.

6. System nach Anspruch 1, das Laschen (32) aufweist, die fest mit dem Rotor (23) verbunden sind und entlang einer radial innenliegenden Fläche der Rinne (43), die mit abriebfähigen Elementen versehen ist, gleiten, um eine Labyrinthdichtung (42) zu bilden.

7. Turbomaschine, umfassend ein Lagergehäuse (E1), das mit einem Dichtungssystem nach Anspruch 1 ausgestattet ist.

8. Turboreaktor, der ein Lagergehäuse (E1) umfasst, das mit einem Dichtungssystem nach Anspruch 1 ausgestattet ist.

## Claims

1. System (21) for sealing and draining leaks of oil for a turbine-engine bearing chamber (E1), this bearing comprising a stator (22) carrying a rotor (23) rotating about a rotation axis (AX), this system (21) comprising a seal (25) carried by the stator (22) and surrounding the rotor (23), an external circumferential groove (26) carried by the stator (22) while being contiguous with the seal (25) to collect leaking oil (H) travelling along the rotor (23) through the seal (25) and which is centrifuged by the rotor (23) towards this circumferential groove (26), a drain (36) located at the bottom part of the turbine engine for collecting the oil (H) recovered by the circumferential groove (26), this circumferential groove (26) being open towards the rotation axis (AX) while being delimited by a bottom (33) extended by two lateral walls (34, 35), the lateral wall (35) opposite to the seal (25) terminating in a gutter (43) opening towards the bottom (33) **characterized in that** the gutter (43) is absent at the bottom part of the circumferential groove (26).

2. System according to claim 1, wherein the bottom (33) is formed by a frustoconical wall the inside diameter of which decreases on moving away from the seal (25).

3. System according to claim 1, comprising an internal circumferential groove (29) formed in the rotor (23) facing the external circumferential groove (26), this internal circumferential groove (29) having a length along the rotation axis (AX) that is less than the length of the external circumferential groove (26) along the rotation axis (AX).

4. System according to claim 3, wherein the internal circumferential groove (29) has a frustoconically shaped bottom the inside diameter of which decreases on moving away from the seal (25).

5. System according to claim 2, wherein the rotor includes a circumferential rib (31) terminating the internal circumferential groove (29).

6. System according to claim 1, including knife-edge seals (32) secured to the rotor (23) and sliding along a radially internal face of the gutter (43) that is provided with abradable elements, to form a labyrinth seal (42).

7. Turbine engine comprising a bearing chamber (E1) that is equipped with a sealing system according to claim 1.

8. Turbine engine comprising a bearing chamber (E1) that is equipped with a sealing system according to claim 1.
